(19) **Europäisches Patentamt**

**European Patent Office**

**Office européen des brevets**

(11) **EP 0 742 386 B1**

(12) # EUROPEAN PATENT SPECIFICATION

(45) Date of publication and mention
of the grant of the patent:
**09.08.2000 Bulletin 2000/32**

(51) Int Cl.⁷: **F16H 61/06**

(21) Application number: **96107385.5**

(22) Date of filing: **09.05.1996**

(54) **Control device for an automatic transmission**

Steuerung für ein automatisches Getriebe

Dispositif de commande pour une transmission automatique

(84) Designated Contracting States:
**DE GB**

(30) Priority: **12.05.1995 JP 11501095**

(43) Date of publication of application:
**13.11.1996 Bulletin 1996/46**

(73) Proprietor: **AISIN AW CO., LTD.**
**Anjo-shi Aichi-ken 444-11 (JP)**

(72) Inventors:
• **Nadayoshi, Kaoru**
**Anjo-shi, Aichi-ken, 444-11 (JP)**
• **Tsutsui, Hiroshi**
**Anjo-shi, Aichi-ken, 444-11 (JP)**

• **Yamamoto, Yoshihisa**
**Anjo-shi, Aichi-ken, 444-11 (JP)**
• **Hayabuchi, Masahiro**
**Anjo-shi, Aichi-ken, 444-11 (JP)**

(74) Representative: **VOSSIUS & PARTNER**
**Siebertstrasse 4**
**81675 München (DE)**

(56) References cited:
**EP-A- 0 479 349**      **EP-A- 0 588 443**
**DE-A- 4 217 270**      **JP-A- 61 249 839**
**US-A- 5 301 572**      **US-A- 5 343 782**

• **PATENT ABSTRACTS OF JAPAN vol. 016, no.**
**529 (M-1332), 29 October 1992 & JP-A-04 194451**
**(HITACHI LTD), 14 July 1992,**

**Description**

The present invention relates to a control system for an automatic transmission and, more particularly, to an automatic transmission control system for achieving ideal engaging characteristics in a clutch and preventing the racing of the engine and the application shock of the clutch.

In the automatic transmission of the prior art, the rotation, as generated by the engine, is transmitted to a speed change unit through a fluid transmission such as a torque converter so that its speed is changed by the speed change unit. Between the fluid transmission and the speed change unit, moreover, there is arranged a first clutch (or input clutch) which can be applied/released to start the vehicle.

When a starting operation is performed by depressing the accelerator pedal, the first clutch is applied. At this time, the oil pressure to be fed to the hydraulic servo of the first clutch is so controlled on the basis of the values corresponding to the engine torque, such as the engine RPM or the throttle opening that the first clutch may take ideal engaging characteristics, thereby to prevent the racing of the engine and the application shock (as disclosed in JP-A-61 249 839.

In the control system for an automatic transmission of the prior art, however, the ideal engaging characteristics are difficult to achieve as a matter of fact, if an error occurs in the output of a control valve for generating the oil pressure or if an aging occurs in the first clutch.

It is, therefore, conceivable to effect such a feedback control by setting ideal change characteristics in parameters indicating the applied/released state of the first clutch and by detecting the actual parameters so that the error of the detected parameters from the parameters setting the ideal change characteristics may be small.

If a control gain is enlarged at this time, the follow-up can be improved even if the aforementioned error is large, but the oil pressure seriously fluctuates to deteriorate the convergence.

If the control gain is reduced, on the other hand, the convergence is improved but the follow-up is deteriorated to make it difficult to achieve the ideal engaging characteristics.

The present invention has an object to solve the aforementioned problems of the control system for an automatic transmission of the prior art and to provide a control system for an automatic transmission, which can achieve ideal engaging characteristics in a clutch and can prevent the racing of the engine and the application shock.

The object is achieved by the features of the claims.

An embodiment of the present invention will be described in detail in the following with reference to the accompanying drawings.

Fig. 1 is a functional block diagram of a control system for an automatic transmission in an embodiment of the present invention;
Fig. 2 is a schematic diagram of the automatic transmission in the embodiment of the present invention;
Fig. 3 is a diagram tabulating the operations of the automatic transmission in the embodiment of the present invention;
Fig. 4 is a hydraulic circuit diagram of an essential portion of a hydraulic control unit in the embodiment of the present invention;
Fig. 5 is a flow chart illustrating the operations of the control system for an automatic transmission in the embodiment of the present invention;
Fig. 6 is a time chart of an application routine in the embodiment of the present invention;
Fig. 7 is a chart showing a sub-routine of the application in the embodiment of the present invention;
Fig. 8 is a diagram presenting a map of a sweep-up pressure in the embodiment of the present invention;
Fig. 9 is a diagram presenting a map of an ideal engine RPM in the embodiment of the present invention;
Fig. 10 is an engaging characteristic diagram of a first clutch in the embodiment of the present invention;
Fig. 11 is a characteristic diagram of an engine RPM in the embodiment of the present invention; and
Fig. 12 is a diagram presenting a correction map in the embodiment of the present invention.

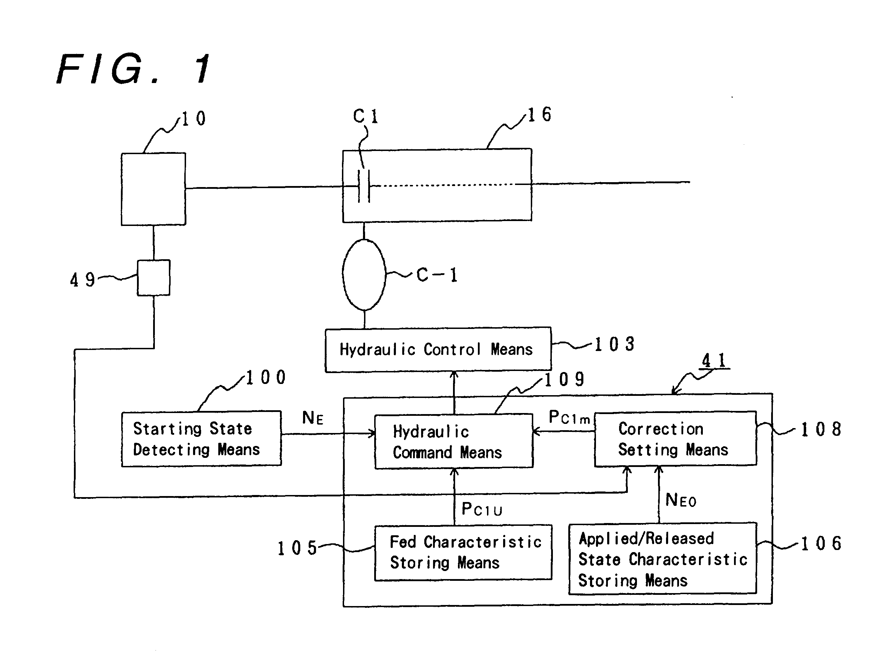

In Fig. 1: reference numeral 10 designates an engine; characters C1 a first clutch adapted to be applied, when a forward running range is selected, for transmitting the rotation of the engine 10 to a transmission mechanism of a speed change unit 16; characters C-1 a hydraulic servo for applying/releasing the first clutch C1; and numeral 100 starting state detecting means for detecting a vehicle starting state which is dictated by the dissatisfaction of at least one of the conditions that a throttle opening $\theta$ is fully closed, the not-shown brake pedal is depressed and that the vehicle speed is substantially zero.

Moreover: numeral 49 designates an engine RPM sensor acting as applied/released state detecting means for detecting the applied/released state of the first clutch C1 as an engine RPM $N_E$; numeral 103 hydraulic control means for controlling a C-1 oil pressure $P_{C1}$ to be fed to the hydraulic servo C-1; and numeral 41 an automatic transmission control unit acting as a control system.

The automatic transmission control unit 41 is provided with: fed characteristic storing means 105 stored with a sweep-up pressure $P_{C1U}$ for achieving the ideal engaging characteristics of the first clutch C1, in accordance with the elapsed time and the throttle opening $\theta$; applied/released state characteristic storing means 106 stored with an engine RPM $N_{EO}$ indicating the applied/released state of the first clutch C1 if the ideal engaging characteristics are achieved, in accordance with the elapsed time T and the throttle opening θ; correction setting means 108 for determining the difference between the engine RPM $N_E$, which is detected by the engine RPM sensor 49 and indicates the actual applied/released state of the first clutch C1, and the engine RPM $N_{EO}$, which is read out from the applied/released state storing means 106 and indicates the ideal applied/released state, to set an oil pressure correction $P_{C1m}$ in accordance with that difference; and hydraulic command means 109 for reading out the sweep-up pressure $P_{C1P}$ from the fed characteristic storing means 105, if the vehicle starting state is detected, and adding the oil pressure correction $P_{C1m}$ to the sweep-up pressure $P_{C1U}$.

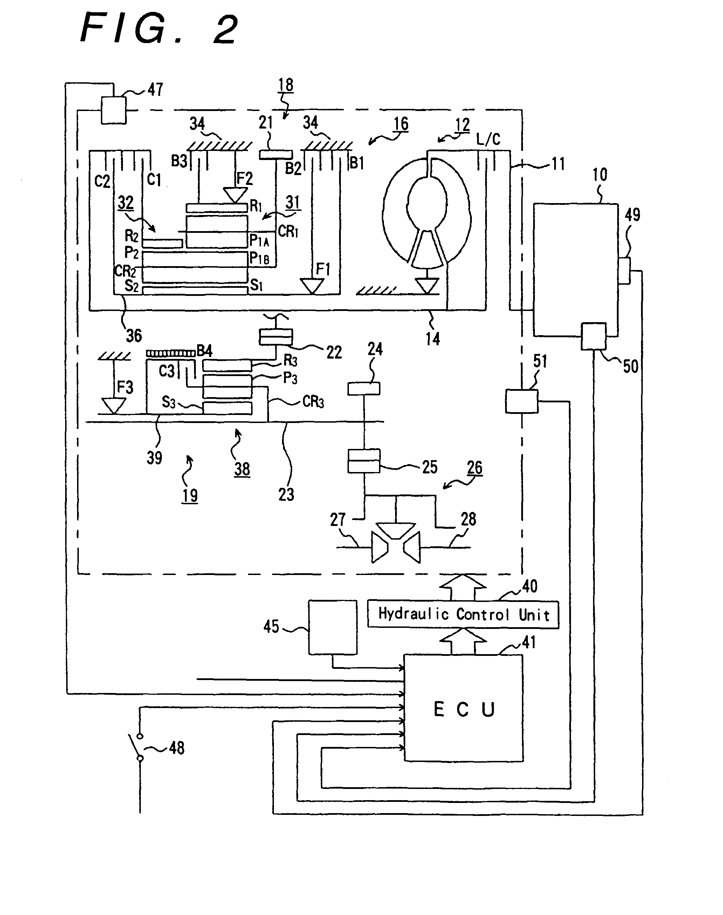

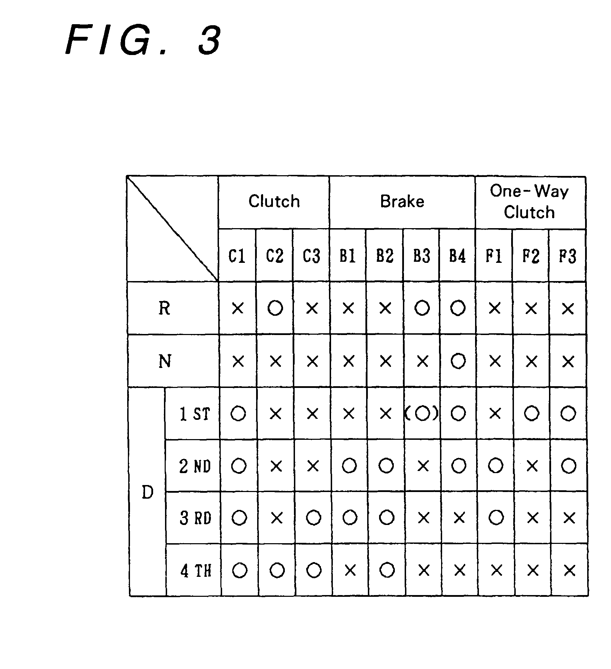

Fig. 2 is a schematic diagram of the automatic transmission in a first embodiment of the present invention, and Fig. 3 is a table enumerating the operations of the automatic transmission in the embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil) but transmits the rotation directly to the output shaft 14, when the vehicle speed exceeds a predetermined value so that a lockup clutch L/C is applied.

To the output shaft 14, there is connected the speed change unit 16 for establishing four forward and one reverse speeds. This speed change unit 16 is constructed to include a main transmission 18 for three forward and one reverse speeds and an under-drive auxiliary transmission 19. Moreover, the rotation of the main transmission 18 is transmitted through a counter drive gear 21 and a counter driven gear 22 to the auxiliary transmission 19, and the rotation of the output shaft 23 of the auxiliary transmission 19 is transmitted through an output gear 24 and a ring gear 25 to a differential mechanism 26.

In this differential mechanism 26, the rotation, as transmitted through the output gear 24 and the ring gear 25, is differentiated so that the differential rotations are transmitted through lefthand and righthand drive shafts 27 and 28 to the not-shown drive wheels.

The main transmission 18 is equipped with a first planetary gear unit 31 and a second planetary gear unit 32 and further with the first clutch clutch C1, a second clutch C2, a first brake B1, a second brake B2, a third brake B3 and one-way clutches F1 and F2 for transmitting the torque selectively between the individual elements of the two planetary gear units 31 and 32. The first clutch C1 functions as an input clutch for transmitting the rotation from the torque converter 12 to the transmission mechanism which is constructed of the remaining elements of the first main transmission 18 and the auxiliary transmission 19.

The first planetary gear unit 31 is composed of: a ring gear $R_1$ connected to a drive unit casing 34 through the third brake B3 and the one-way clutch F2 which are arranged in parallel with each other; a sun gear $S_1$ formed on a sun gear shaft 36 fitted on and rotatably supported by the output shaft 14; a carrier $CR_1$ connected to the counter drive gear 21; and pinions $P_{1A}$ and $P_{1B}$ meshing between the ring gear $R_1$ and the sun gear $S_1$ and rotatably supported by the carrier $CR_1$.

Moreover, the sun gear shaft 36 is connected through the second clutch C2 to the output shaft 14. The sun gear shaft 36 is further connected through the first brake B1 to the drive unit casing 34 and through the one-way clutch F1 and the second brake B2, as arranged in series, to the drive unit casing 34.

On the other hand, the second planetary gear unit 32 is composed of: a ring gear $R_2$ connected through the first clutch C1 to the output shaft 14; a sun gear $S_2$ formed on the sun gear shaft 36 integrally with the sun gear $S_1$; a carrier $CR_2$ connected to the carrier $CR_1$; and a pinion $P_2$ meshing between the ring gear $R_2$ and the sun gear $S_2$, rotatably supported by the carrier $CR_2$ and formed integrally with the pinion $P_{1B}$.

Moreover, the counter drive gear 21 is made to mesh with the counter driven gear 22 arranged in the auxiliary transmission 19, to transmit the rotation, as has its speed changed by the main transmission 18, to the auxiliary transmission 19.

This auxiliary transmission 19 is equipped with a third planetary gear unit 38 and with a third clutch C3, a fourth brake B4 and a one-way clutch F3 for transmitting the torque selectively between the individual elements of the third planetary gear unit 38.

The third planetary gear unit 38 is composed of: a ring gear $R_3$ connected to the counter driven gear 22; a sun gear $S_3$ formed on a sun gear shaft 39 rotatably fitted on the output shaft 23; a carrier $CR_3$ fixed on the output shaft 23; and a pinion $P_3$ meshing between the ring gear $R_3$ and the sun gear $S_3$ and rotatably supported by the carrier $CR_3$.

Here will be described the operations of the automatic transmission having the construction thus far described.

Incidentally, in Fig. 3: characters C1 designate the first clutch, characters C2 the second clutch; characters C3 the third clutch; characters B1 the first brake; characters B2 the second brake; characters B3 the third brake; characters B4 the fourth brake; and characters F1 to F3 the one-way clutches. Moreover: letter R designates a reverse running range; letter N an N-range; letter D a forward running range (as will be called the "D-range"); characters 1ST a 1st-speed gear stage; characters 2ND a 2nd-speed gear stage; characters 3RD a 3rd-speed gear stage; and characters 4TH a 4th-speed gear stage.

Moreover, symbol ○ indicates that the first clutch C1, the second clutch C2, the third clutch C3, the first brake B1, the second brake B2, the third brake B3 and the fourth brake B4 are applied, and that the one-way clutches F1 to F3 are locked. On the other hand, symbol X indicates that the first clutch C1, the second clutch C2, the third clutch C3, the first brake B1, the second brake B2, the third brake B3 and the fourth brake B4 are released, and that the one-way clutches F1 to F3 are free.

Incidentally, symbol (○) indicates that the third brake B3 is applied at the engine brake time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear $R_2$. In this state, the rotation of the ring gear $R_1$ is blocked by the one-way clutch F2 so that the rotation of the carrier $CR_2$ is drastically decelerated and transmitted to the counter driven gear 21 while rotating the sun gear $S_2$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear $R_2$. The rotation of this ring gear $R_2$ is decelerated and transmitted to the carrier $CR_2$, because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear $R_2$. The rotation of this ring gear $R_2$ is decelerated and transmitted to the carrier $CR_2$ because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into a direct-coupled state. As a result, the rotation of the counter driven gear 22 is unchangedly transmitted to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear $R_2$ and through the second clutch C2 to the sun gear $S_2$ to bring the first planetary gear unit 31 and the second planetary gear unit 32 into direct-coupled states. As a result, the rotation of the output shaft 11 is unchangedly transmitted to the counter drive gear 21.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into the direct-coupled state. As a result, the rotation of the counter driven gear 22 is unchangedly transmitted to the output shaft 23.

Incidentally, the automatic transmission is provided with a hydraulic control unit 40 for establishing the individual gear stages by applying/releasing the first clutch C1, the second clutch C2, the third clutch C3, the first brake B1, the second brake B2, the third brake B3 and the fourth brake B4.

Moreover, the hydraulic control unit 40 is connected with the automatic transmission control unit (ECU) 41 so that they are operated according to the control program of the automatic transmission control unit 41.

With this automatic transmission control unit 41, on the other hand, there are individually connected a neutral start switch (N.S.S.W.) 45, an RPM sensor 47, a brake switch 48, the engine RPM sensor 49, a throttle opening sensor 50 and a vehicle speed sensor 51.

Moreover, the shift position of the not-shown shift lever, i.e., the selected range can be detected by the neutral start switch 45. The RPM of the output shaft 14 (as will be called the "clutch input side RPM") $N_{C1}$, as located at the input side of the first clutch C1, can be detected by the RPM sensor 47.

Furthermore, whether or not the not-shown brake pedal is depressed can be detected by the brake switch 48. An engine RPM $N_E$ can be detected by the engine RPM sensor 49. The throttle opening θ can be detected by the throttle opening sensor 50. The RPM (as will be called the "output RPM") $N_O$ at the output side of the speed change unit 16, i.e., the vehicle speed can be detected by the vehicle speed sensor 51.

Here will be described the hydraulic control unit 40.

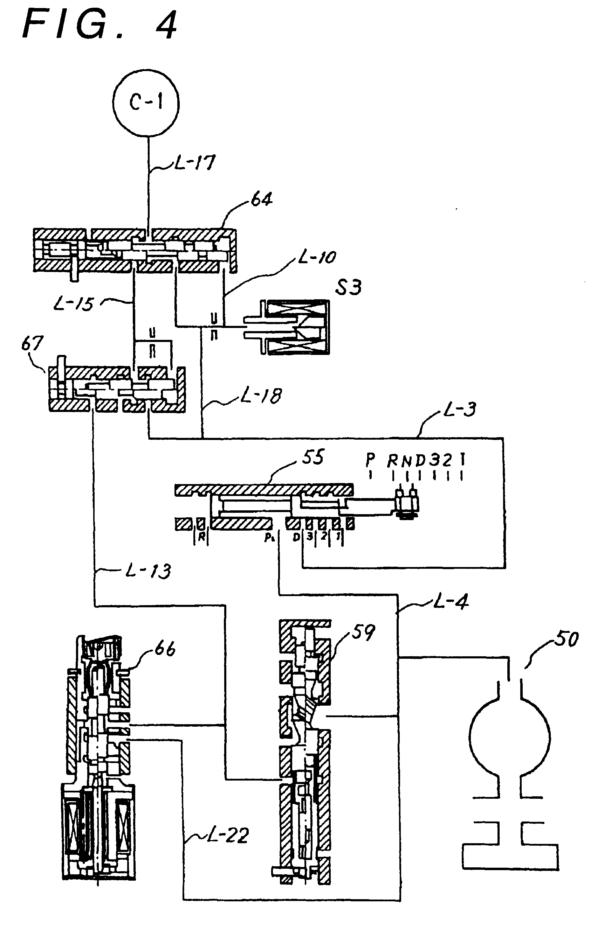

Fig. 4 is a hydraulic circuit diagram of an essential portion of the hydraulic control unit in the embodiment of the present invention.

As shown, a primary valve 59 regulates the oil pressure coming from the a pump 50 and outputs it as a line pressure to an oil line L-4. Moreover, a manual valve 55 is provided with ports 1, 2, 3, D, $P_L$ and R so that the line pressure, as outputted from the primary valve 59, is fed via the oil line L-4 to the port $P_L$. The manual valve 55 is connected to the not-shown shift lever, which is operated to output the line pressure as the 1st-range pressure, the 2nd-range pressure, 3rd-range pressure, the D-range pressure and the R-range pressure from the ports 1, 2, 3, D and R.

When the shift lever is placed in the D-range position, the oil under the D-range pressure, as generated in the port D, is fed to the individual hydraulic servos to apply the first clutch C1 (Fig. 2), the second clutch C2, the third clutch C3, the first brake B1, the second brake B2 and the third brake B3 selectively thereby establish one of the gear stages.

In this case, when a gear stage is set to correspond to the vehicle speed and the throttle opening θ so that its shift output is generated, the solenoid signals corresponding to the shift output are turned ON/OFF. When the solenoid valves are opened/closed in response to the ON/OFF of the solenoid signals, the not-shown 1-2 shift valve, 2-3 shift valve and 3-4 shift valve are switched.

Incidentally, a linear solenoid valve 66 is arranged for the neutral control. This linear solenoid valve 66 is controlled in response to the signal from the hydraulic control unit 40 so that it adjusts the oil pressure, as fed from the primary valve 59 via an oil line L-22, to generate a throttle pressure $P_{TH}$. Moreover, the linear solenoid valve 66 feed the throttle pressure $P_{TH}$ as a control oil pressure to a C-1 control valve 67 via an oil line L-13.

The C-1 control valve 67 is fed with the D-range pressure via an oil line L-3 so that it regulates the fed D-range pressure to the C-1 oil pressure $P_{C1}$ corresponding to the throttle pressure $P_{TH}$ from the linear solenoid valve 66 and feeds it to an oil line L-15.

With the oil line L-15, on the other hand, there is connected a neutral relay valve 64 which is connected to a hydraulic servo C-1 via an oil line L-17 and to a solenoid valve S3 via an oil line L-10. Moreover, the neutral relay valve 64 is connected with the oil line L-3 via an oil line L-18 so that it can feed the D-range pressure.

At the neutral control time, the solenoid valve S3 is turned ON so that the neutral relay valve 64 takes its upper half position. As a result, the C-1 oil pressure $P_{C1}$, as generated in the oil line L-15, is fed via the oil line L-17 to the hydraulic servo C-1.

At the 1st to 4th speed times, on the other hand, the solenoid valve S3 is turned OFF so that the neutral relay valve 64 takes its lower half position. As a result, the oil under the D-range pressure is fed via the oil lines L-3 and L-18 and the neutral relay valve 64 and the oil line L-17 to the hydraulic servo C-1.

Here, the neutral relay valve 64, the linear solenoid valve 66, the C-1 control valve 67 and the hydraulic servo C-1 thus far described constitute the hydraulic control means 103 (Fig. 1).

In the control system for the automatic transmission thus constructed, if the vehicle stop state is detected from the facts that the forward running range is selected, that the throttle opening θ is fully closed, that the not-shown brake pedal is depressed and that the vehicle speed is substantially zero, the neutral control is executed by the automatic transmission control unit 41.

In this neutral control, the throttle pressure $P_{TH}$ is gradually lowered to effect the sweep-down, and the pressure is then repeatedly lowered and raised to hold the released state of the first clutch C1. When the vehicle stop state is not detected, the throttle pressure $P_{TH}$ is gradually raised.

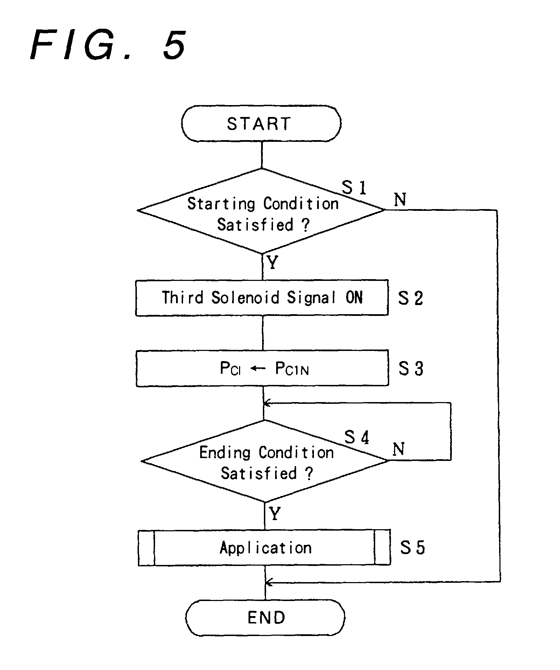

Fig. 5 is a flow chart illustrating the operations of the control system for an automatic transmission in the embodiment of the present invention.

Step S1: The not-shown stop state detecting means in the automatic transmission control unit 41 (Fig. 2) decides whether or not the condition for starting the neutral control is satisfied. The routine advances to Step S2, if the starting condition is satisfied, but is ended if NOT.

If, in this case, the vehicle stop state is detected by satisfying all the conditions that the engine 10 is in the idling state, that the throttle opening θ is fully closed, that the not-shown brake pedal is depressed to turn ON the brake switch 48, that the D-range is selected by the not-shown shift lever, and that the vehicle speed is not higher than a set value but substantially zero, it is decided the starting condition holds.

Step S2: A third solenoid signal for opening/closing the solenoid valve S3 (Fig. 4) is turned ON.

Step S3: The not-shown stop oil pressure generating means in the automatic transmission control unit 41 generates a stop oil pressure $P_{C1N}$ and sets it at the C-1 oil pressure $P_{C1}$ so that the first clutch C1 can be placed in the state immediately before its engagement. For this, the throttle pressure $P_{TH}$ is gradually lowered to effect the sweep-down and is then repeatedly lowered and raised to set the C-1 oil pressure $P_{C1}$ to the stop oil pressure $P_{C1N}$. Thus, the first clutch C1 is held in the released state so that it can be placed in the state immediately before the start of engagement.

Step S4: The satisfaction of the condition for ending the neutral control is awaited. If, in this case, any of the following conditions is dissatisfied: that the throttle opening θ is fully closed; that the brake switch 48 is ON; that the D-range is selected; and the vehicle speed is not higher than the set value but substantially zero, the vehicle starting condition is detected, but the vehicle stopping condition is not. Hence, it is decided that the condition for ending the neutral control is satisfied.

Step S5: The clutch application is executed.

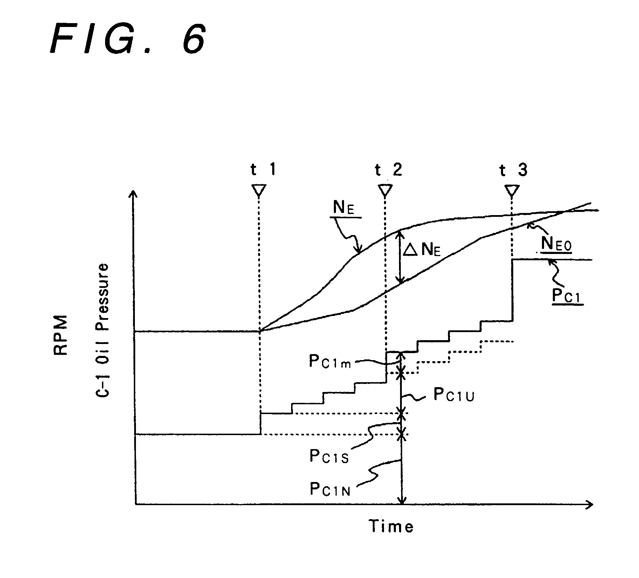

Fig. 6 is a time chart of an application routine in the embodiment of the present invention. Incidentally, the abscissa of Fig. 6 indicates the time, and the ordinate indicates the RPM and the C-1 oil pressure $P_{C1}$.

In Fig. 6: reference letters $N_E$ designate the actual engine RPM, as detected by the engine RPM sensor 49 (Fig. 2); characters $N_{EO}$ an ideal engine RPM; characters $\triangle N_E$ the rotational difference between the actual engine RPM $N_E$ and the ideal engine RPM $N_{EO}$; and characters $P_{C1}$ the C-1 oil pressure to be fed to the hydraulic servo C-1.

As illustrated, the application is started at timing tl. If the not-shown accelerator pedal is depressed, for example, the actual engine RPM $N_E$ rises with lapse of time from the idling RPM.

In this case, at the timing tl for starting the application, the C-1 oil pressure $P_{C1}$ is the sum of the stop oil pressure $P_{C1N}$ controlled at Step S3 and an initial engaging pressure $P_{C1S}$ and is then swept up with the lapse of time so that it is gradually raised. For this, the sweep-up pressure $P_{C1U}$ is added to the sum of the stop oil pressure $P_{C1N}$ and the initial engaging pressure $P_{C1S}$.

Incidentally, the actual engine RPM $N_E$ is the one which is actually detected by the engine RPM sensor 49 and rises faster than the ideal engine RPM $N_{EO}$ which is required for achieving the ideal engaging characteristics of the first clutch C1. As a result, the rotational difference $\triangle N_E$ is established between the actual engine RPM $N_E$ and the ideal engine RPM $N_{EO}$.

Before lapse of a constant time, moreover, the rotational difference $\triangle N_E$ grows large with the lapse of time so that the engaging characteristics of the first clutch Cl deviate from the ideal ones. If the rotational difference $\triangle N_E$ exceeds a set value δ at timing t2, the oil pressure correction $P_{C1m}$ corresponding to the rotational difference $\triangle N_E$ is issued and is further added to the sum of the stop oil pressure $P_{C1N}$, the initial engaging pressure $P_{C1S}$ and the sweep-up pressure $P_{C1U}$.

Thus, the C-1 oil pressure $P_{C1}$ is gradually raised and is abruptly raised when the hydraulic servo C-1 is filled up with the oil at timing t3.

As a result, even if an error occurs in the output of the control valve of the hydraulic control means 103 (Fig. 1) or if an aging occurs in the first clutch C1, the oil pressure is corrected by the oil pressure correction $P_{C1m}$ according to the rotational difference $\triangle N_E$ between the actual engine RPM $N_E$ and the ideal engine RPM $N_{EO}$, so that the engaging characteristics to be obtained can be approximate the ideal ones. As a result, it is possible to prevent the racing of the engine 10 and the application shock.

Thanks to the fed characteristic storing means which is stored with the oil pressure for achieving the ideal engaging characteristics of the first clutch C1, moreover, the difference between the ideal engaging characteristics and the actual engaging characteristics does not grow large. This makes it possible to set the oil pressure correction $P_{C1m}$ at a small value and to improve the follow-up and the convergence. Moreover, since the applied/released state of the first clutch C1 is detected in terms of the actual engine RPM $N_E$, its detection can be facilitated to improve the controllability.

Here will be described the application sub-routine of Step S5 of Fig. 5.

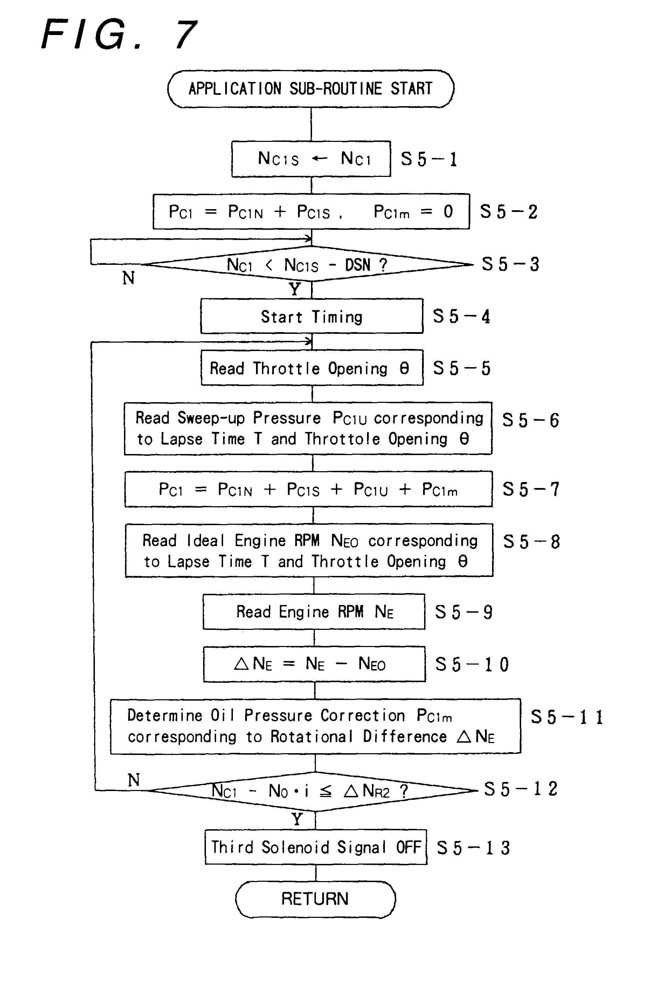

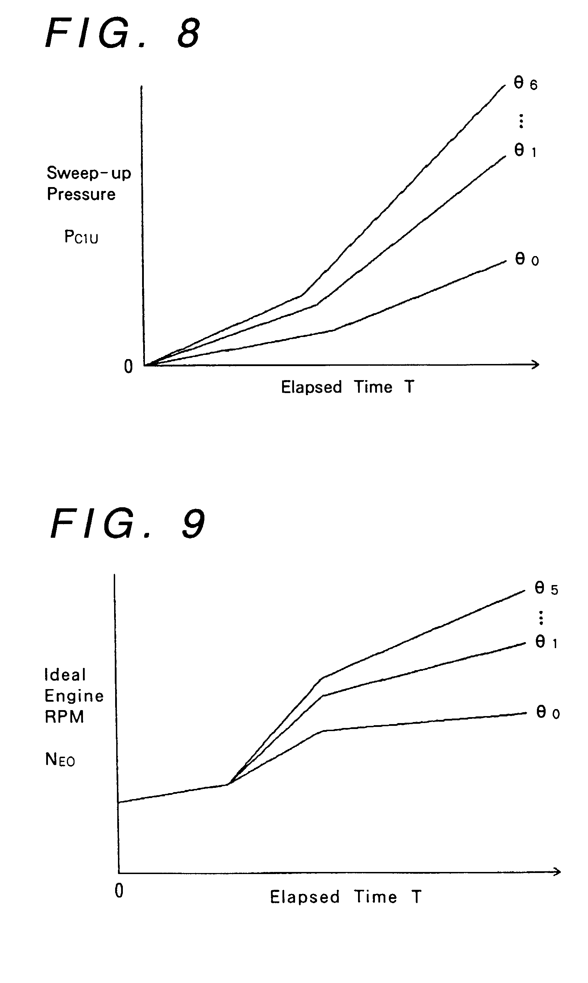

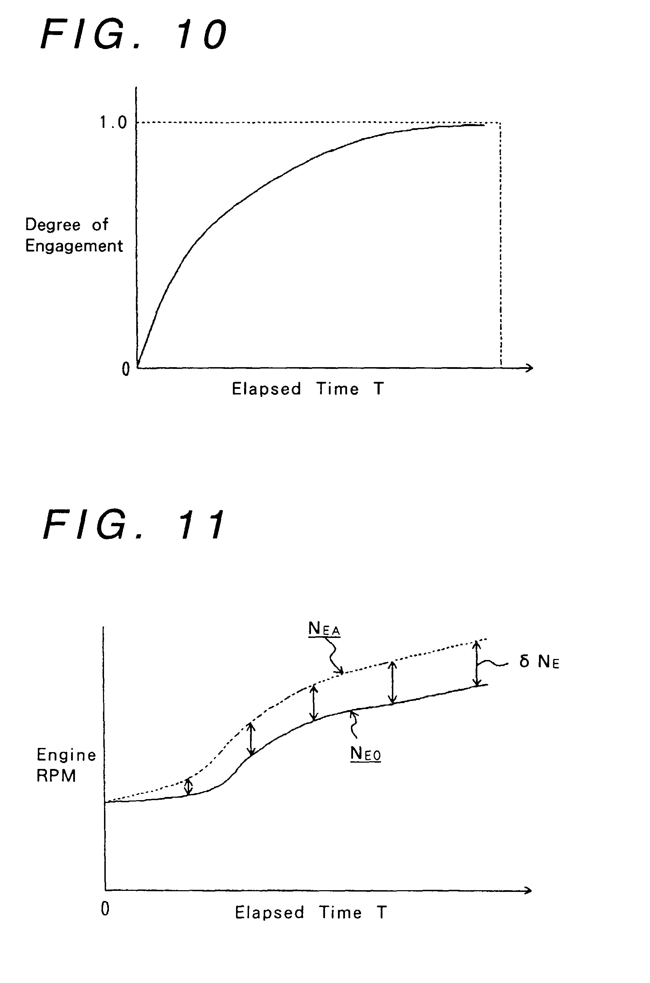

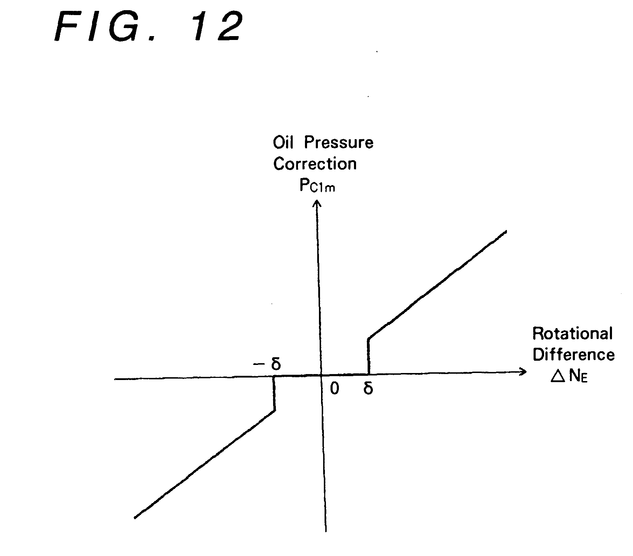

Fig. 7 is a chart showing a sub-routine of the application in the embodiment of the present invention; Fig. 8 is a diagram presenting a map of a sweep-up pressure in the embodiment of the present invention; Fig. 9 is a diagram presenting a map of an ideal engine RPM in the embodiment of the present invention; Fig. 10 is an engaging characteristic diagram of a first clutch in the embodiment of the present invention; Fig. 11 is a characteristic diagram of an engine RPM in the embodiment of the present invention; and Fig. 12 is a diagram presenting a correction map in the embodiment of the present invention. Incidentally: the abscissa of Fig. 8 indicates the elapsed time T, and the ordinate indicates the sweep-up pressure $P_{C1U}$; the abscissa of Fig. 9 indicates the elapsed time T, and the ordinate indicates the ideal engine RPM $N_{EO}$; the abscissa of Fig. 10 indicates the elapsed time T, and the ordinate indicates the degree of engagement; the abscissa of Fig. 11 indicates the elapsed time T, and the ordinate indicates the engine RPM; and the abscissa of Fig. 12 indicates the rotational difference $N_{EO}$, and the ordinate the oil pressure correction $P_{c1m}$.

Step S5-1: The clutch input side RPM $N_{C1}$ at the instant when the condition for ending the neutral control is satisfied is set to a value $N_{C1S}$.

Step S5-2: The initial engaging pressure $P_{C1S}$ as the shelf pressure is added to the stop oil pressure $P_{C1N}$ as the base pressure, and the sum is used as the C-1 oil pressure $P_{C1}$. Incidentally, the initial engaging pressure $P_{C1S}$ is generated by the not-shown initial engaging pressure generating means in the automatic transmission control unit (Fig. 2) and can be set to such a value as to move the not-shown piston of the hydraulic servo C-1 (Fig. 4) and to reduce the application shock which is caused by the engagement. At this time, moreover, the oil pressure correction $P_{C1m}$ is zero.

In the case of the neutral control, the first clutch C1 is held in the state immediately before the start of its engagement so that the piston of the hydraulic servo C-1 is placed in a slightly retracted position. If the C-1 oil pressure $P_{C1}$ is raised from that state, the piston is prevented from instantly moving by the starting resistance.

In the present embodiment, when the vehicle starting state is detected, the initial engaging pressure $P_{C1S}$ is added at first to the sweep-up pressure $P_{C1U}$, and this sum is outputted to the hydraulic control means 103 (Fig. 1) so that the piston can be moved against the aforementioned starting resistance. As a result, the engaging time can be shortened.

Step S5-3: It is awaited that the clutch input side RPM $N_{C1}$ becomes smaller than the difference of the value $N_{C1S}$ from a constant DSN.

Step S5-4: The timing operation by the timer is started.

Step S5-5: The automatic transmission control unit 41 reads the throttle opening θ which is detected by the throttle opening sensor 50.

Step S5-6: The hydraulic command means 109 reads the sweep-up pressure $P_{C1U}$ for sweeping up the C-1 oil pressure $P_{C1}$, with reference to the map of Fig. 8, which is stored in the fed characteristic storing means 105. The sweep-up pressure $P_{C1U}$ is set to correspond to the elapsed time T, as measured by the timer, and the throttle opening θ .

Step S5-7: The hydraulic command means 109 sets the C-1 oil pressure $P_{C1}$ by adding the initial engaging pressure $P_{C1S}$, the sweep-up pressure $P_{C1U}$ and the oil pressure correction $P_{C1m}$ to the stop oil pressure $P_{C1N}$, and outputs the sum to the hydraulic control means 103.

Step S5-8: The correction setting means 108 reads the ideal engine RPM $N_{EO}$ corresponding to the elapsed time T, as measured by the timer, and the throttle opening θ with reference to the map of Fig. 9, as stored in the applied/released state characteristic storing means 106.

In Fig. 11, reference letters $N_{EA}$ designate an engine RPM of the case in which the engine 10 is driven with a constant throttle opening θ but without exerting any load. Moreover, this engine RPM $N_{EA}$ is lowered by the value δ $N_E$ which is determined by the characteristics of the torque converter 12 and the degree of engagement of the first clutch C1, when the engine 10 and the first clutch C1 are connected through the torque converter 12 so that the first clutch C1 may be applied with the engaging characteristics, as illustrated in Fig. 10.

Hence, the value which is made lower by the value δ $N_E$ than the engine RPM $N_{EA}$ is set to the ideal engine RPM $N_{EO}$.

Step S5-9: The correction setting means 108 reads the actual engine RPM $N_E$ which is detected by the engine RPM sensor 49.

Step S5-10: The correction setting means 108 decides the rotational difference △ $N_E$ by subtracting the ideal engine RPM $N_{EO}$ from the actual engine RPM $N_E$.

Step S5-11: The correction setting means 108 determined the oil pressure correction $P_{C1m}$ corresponding to the rotational difference △ $N_E$, with reference to Fig. 12. In this case, the oil pressure correction $P_{C1m}$ is set to zero if the rotational difference △ $N_E$ is smaller than the set value δ.

Hence, it is possible to prevent the C-1 oil pressure $P_{C1}$ to be fed to the hydraulic servo C-1 from fluctuating when the oil pressure correction $P_{C1m}$ is added. Since the set value δ is changed according to the detection accuracy of the engine RPM sensor 49, the oil pressure correction $P_{C1m}$ need not be uselessly issued so that the time period necessary for the application can be shortened.

Step S5-12: It is decided whether or not the application of the first clutch C1 is ended. The routine advances to Step S5-13, if the application is ended, but returns to Step S5-5 if the application is not ended. In this case, whether or not the application of the first clutch C1 is ended is decided by multiplying the output RPM $N_O$, as detected by the vehicle speed sensor 51, and the gear ratio i of the speed change unit 16 to calculate the value $N_O$ · i and by comparing the value, which is calculated by subtracting the value $N_O$ i from the clutch input side RPM $N_{C1}$, with a set value △ $N_{R2}$. Moreover, it is decided that the application of the first clutch C1 is ended, if the following relations hold:

$$N_{C1} - N_O \cdot i \leqq N_{R2}.$$

Step S5-13: The third solenoid valve is turned OFF.

According to the present invention, as described above, the control system for an automatic transmission comprises: a clutch for transmitting the rotation of an engine to the transmission mechanism of a speed change unit; a hydraulic servo for applying/releasing the clutch; starting state detecting means for detecting the vehicle starting condition in which at least one of the following conditions is dissatisfied: that the throttle opening is fully closed; that the brake pedal is depressed; and that the vehicle speed is substantially zero; throttle opening detecting means for detecting the throttle opening of the engine; applied/released state detecting means for detecting the applied/released state of the clutch; hydraulic control means for controlling the oil pressure to be fed to the hydraulic servo; and a control unit.

Moreover, the control unit includes: fed characteristic storing means stored with the oil pressure for achieving the ideal engaging characteristics of the clutch, in accordance with the elapsed time and the throttle opening; applied/released state characteristic storing means stored with the applied/released state of the clutch if the ideal engaging characteristics are obtained, in accordance with the elapsed time and the throttle opening; correction setting means for setting an oil pressure correction according to the difference which is determined from between the actual applied/released state of the clutch, as detected by the applied/released state detecting means, and the ideal applied/released state, as read out from the applied/released state characteristic storing means; and hydraulic command means for reading out the oil pressure from the fed characteristic storing means, if the vehicle starting state is detected, to add the oil pressure correction to the read oil pressure.

If, in this case, at least one of the following conditions is dissatisfied: that the throttle opening is fully closed; that the brake pedal is depressed; and that the vehicle speed is substantially zero, the starting state detecting means detects the vehicle starting state.

Moreover, the control unit detects the actual applied/released state of the clutch and determines the difference between the actual applied/released state and the ideal applied/released state, as read out from the applied/released state characteristics storing means, thereby to set the oil pressure correction in accordance with that difference.

Next, the control unit read outs the oil pressure for achieving the ideal engaging characteristics of the clutch from the fed characteristics storing means and adds the oil pressure correction to the read oil pressure until it outputs the sum to the hydraulic control means.

Even if an error occurs in the output of the control valve of the hydraulic control means or if an aging occurs in the clutch, the oil pressure is corrected by the oil pressure correction according to the difference between the actual applied/released state and the ideal applied/released state so that the engaging characteristics obtained are approximate the ideal ones. As a result, it is possible to prevent the racing of the engine and the application shock.

With the fed characteristic storing means being stored with the ideal engaging characteristics of the clutch, moreover, the difference between the ideal engaging characteristics and the actual engaging characteristics is not large. This makes it possible to set the oil pressure correction at a low value and to improve the follow-up and the convergence.

In another control system for an automatic transmission of the present invention, moreover, the applied/released state of the clutch is detected in terms of an engine RPM by the applied/released state detecting means, and wherein the applied/released state characteristic storing means is stored with the engine RPM of the case in which the ideal applied/released state is obtained, in accordance with the elapsed time and the throttle opening.

In this case, it is possible to detect the applied/released state of the clutch easily and to improve the controllability.

In still another control system for an automatic transmission of the present invention, furthermore, the control unit includes: stop state detecting means for detecting the vehicle stop state in which a forward running range is selected, in which the throttle opening is fully closed, in which the brake pedal is depressed and in which the vehicle speed is substantially zero; and stop oil pressure generating means for generating a stop oil pressure immediately before the clutch starts its engagement, if the vehicle stop state is detected.

Moreover, the hydraulic command means reads out the oil pressure from the fed characteristic storing means, if the vehicle starting state is detected, and adds the stop oil pressure to the read oil pressure.

In this case, a shift can be made from the vehicle stop state to the vehicle starting state so that a neutral control can be performed.

In a further control system for an automatic transmission of the present invention, furthermore, the control unit includes: stop state detecting means for detecting the vehicle stop state in which a forward running range is selected, in which the throttle opening is fully closed, in which the brake pedal is depressed and in which the vehicle speed is substantially zero; stop oil pressure generating means for generating a stop oil pressure immediately before the clutch starts its engagement, if the vehicle stop state is detected; and initial engaging pressure generating means for generating an initial engaging pressure.

Furthermore, the hydraulic command means reads out the oil pressure from the fed characteristic storing means, if the vehicle starting state is detected, adds the initial engaging pressure to the read oil pressure to output the sum to the hydraulic control means, and then further adds the stop oil pressure.

In the neutral control, the clutch is held in the state immediately before the start of engagement, so that the piston of the hydraulic servo is placed in a slightly retracted position. If the oil pressure is raised from this state, the piston is prevented from quick movement by a starting resistance.

If, in this case, the vehicle starting state is detected, the oil pressure is read out at first from the fed characteristic storing means, and the initial engaging pressure is added to the read oil pressure. This sum is outputted to the hydraulic control means so that the piston can be moved against the starting resistance. This makes it possible to shorten the application time.

In a further control system for an automatic transmission of the present invention, furthermore, the correction setting means sets the oil pressure correction to zero if the difference between the actual applied/released state and the ideal applied/released state is smaller than a set value.

In this case, it is possible to prevent the oil pressure to be fed to the hydraulic servo from slightly fluctuating when the oil pressure correction is added.

## Claims

1. A control system for an automatic transmission, comprising:

   a clutch (C1) for transmitting the rotation of an engine (10) to the transmission mechanism of a speed change unit (16);

   a hydraulic servo (C-1) for applying/releasing said clutch (C1);

   starting state detecting means (100) for detecting the vehicle starting condition in which at least one of the following conditions is dissatisfied: that the throttle opening is fully closed; that the brake pedal is depressed; and that the vehicle speed is substantially zero;

throttle opening detecting means (50) for detecting the throttle opening ($\theta$) of said engine;

applied state detecting means (49) for detecting the applied state of said clutch (C1);

hydraulic control means (103) for controlling the oil pressure ($P_{C1}$) to be fed to said hydraulic servo (C-1); and

a control unit (41),

wherein said control unit includes:

a timer for measuring an elapsed time (T) from the initiation of a control of engagement of said clutch

fed characteristic storing means (105) having stored the value ($P_{C1U}$) of said oil pressure for achieving the ideal engaging characteristics of said clutch (C1) as a function of the elapsed time (T) and the throttle opening ($\theta$);

applying characteristic storing means (106) having stored the applying characteristics of said clutch (C1) if the ideal engaging characteristics are obtained, as a function of the elapsed time (T) and the throttle opening ($\theta$);

correction setting means (108) for setting an oil pressure correction ($P_{C1m}$) as a function of the difference which is determined from between the actual applied state of said clutch (C1), as detected by said applied state detecting means (49), and the ideal applied state, corresponding to the elapsed time and the throttle opening as read out from said applying characteristic storing means (106); and

hydraulic command means (109) for reading out the oil pressure ($P_{C1U}$) corresponding to the elapsed time and the throttle opening from said fed characteristic storing means (105) and for adding, if said vehicle starting state is detected, said oil pressure correction ($P_{C1m}$) to said read oil pressure ($P_{C1U}$).

2. A control system for an automatic transmission according to claim 1,
wherein the applied state of said clutch (C1) is detected in terms of an engine RPM ($N_E$) by said applied state detecting means (49), and wherein said applying characteristic storing means (106) is stored with the engine RPM ($N_{EO}$) of the case in which the ideal applied state is obtained, as a function of the elapsed time (T) and the throttle opening ($\theta$).

3. A control system for an automatic transmission according to claim 1 or 2,

wherein said control unit (41) further includes: stop state detecting means for detecting the vehicle stop state is which a forward running range is selected, in which the throttle opening ($\theta$) is fully closed, in which the brake pedal is depressed and in which the vehicle speed is substantially zero; and stop oil pressure generating means for generating a stop oil pressure ($P_{C1N}$) immediately before said clutch starts (C1) its engagement. if said vehicle stop state is detected, and
wherein said hydraulic command means (109) reads out the oil pressure ($P_{C1U}$) from said feed characteristic storing means (105), if the vehicle starting state is detected, and adds said stop oil pressure ($P_{C1N}$) in said read oil pressure ($P_{C1U}$)

4. A control system for an automatic transmission according to claim 3.

wherein said control unit (41) further includes: initial engaging pressure generating means for generating an initial engaging pressure ($P_{C1S}$), and
wherein said hydraulic command means (109) outputs the sum of said read oil pressure ($P_{C1U}$) and said initial engaging pressure ($T_{C1S}$) to said hydraulic control means (103) and then further adds said stop oil pressure ($P_{C1U}$).

5. A control system for an automatic transmission according to any of claims 1 to 4,
wherein said correction setting means (108) sets said oil pressure correction ($P_{C1m}$) to zero if the difference between said actual applied state and said ideal applied state is smaller than a set value.

**Patentansprüche**

1. Steuerungssystem für ein Automatikgetriebe mit:

einer Kupplung (C1) zum Übertragen der Drehbewegung eines Motors (10) zum Getriebemechanismus einer Gangschalteinheit (16);
einer Hydraulik-Servo (C-1) zum Ein-/Ausrükken der Kupplung (C1);
einer Anfahrzustanderfassungseinrichtung (100) zum Erfassen eines Fahrzeuganfahrzustands, in dem mindestens eine der folgenden Bedingungen nicht erfüllt ist: die Drosselklappenöffnung ist vollständig geschlossen; das Bremspedal ist betätigt; und die Fahrzeuggeschwindigkeit beträgt im wesentlichen null;

einer Drosselklappenöffnungserfassungseinrichtung (50) zum Erfassen der Drosselklappenöffnung (θ) des Motors;

einer Einrückzustanderfassungseinrichtung (49) zum Erfassen des Einrückzustands der Kupplung (C1);

einer Hydrauliksteuerungseinrichtung (103) zum Steuern des der Hydraulik-Servo (C-1) zuzuführenden Hydraulikdrucks ($P_{C1}$); und

einer Steuereinheit (41)

wobei die Steuereinheit aufweist:

einen Zeitgeber zum Messen einer vom Start einer Einrücksteuerung der Kupplung verstrichenen Zeit (T);

eine Zufuhrkennlinienspeichereinrichtung (105) zum Speichern des Öldruckwertes ($P_{C1U}$) zum Erreichen der idealen Einrückkennlinie der Kupplung (C1) als Funktion der verstrichenen Zeit (T) und der Drosselklappenöffnung (θ);

eine Einrückkennlinienspeichereinrichtung (106) zum Speichern der idealen Einrückkennlinie der Kupplung (C1) als Funktion der verstrichenen Zeit (T) und der Drosselklappenöffnung (θ);

eine Einrichtung (108) zum Festlegen eines Korrekturwertes zum Festlegen eines Öldruckkorrekturwertes ($P_{C1m}$) als Funktion der Differenz zwischen dem durch die Einrückzustanderfassungseinrichtung (49) erfaßten realen Einrückzustand der Kupplung (C1) und dem aus der Einrückkennliniespeichereinrichtung (106) ausgelesenen idealen Einrückzustand, der der verstrichenen Zeit und der Drosselklappenöffnung entspricht; und

eine Hydraulikbefehleinrichtung (109) zum Auslesen des der verstrichenen Zeit und der Drosselklappenöffnung entsprechenden Öldruckwertes ($P_{C1U}$) aus der Zufuhrkennlinienspeichereinrichtung (105) und zum Addieren des Öldruckkorrekturwertes ($P_{C1m}$) zum ausgelesenen Öldruckwert ($P_{C1U}$), wenn der Fahrzeuganfahrzustand erfaßt wird.

2. Steuerungssystem für ein Automatikgetriebe nach Anspruch 1,

wobei der Einrückzustand der Kupplung (C1) durch die Einrückzustanderfassungseinrichtung (49) bezüglich einer Motordrehzahl ($N_E$) erfaßt wird, und wobei die Einrückkennlinienspeichereinrichtung (106) die Motordrehzahl ($N_{EO}$) für den Fall, in dem der ideale Einrückzustand erreicht wird, als Funktion der verstrichenen Zeit (T) und der Drosselklappenöffnung (θ) speichert.

3. Steuerungssystem für ein Automatikgetriebe nach Anspruch 1 oder 2,

wobei die Steuereinheit (41) ferner aufweist: eine Haltezustanderfassungseinrichtung zum Erfassen eines Fahrzeug haltezustands, in dem ein Vorwärtsfahrbereich ausgewählt ist, die Drosselklappenöffnung (θ) vollständig geschlossen ist, das Bremspedal betätigt ist und die Fahrzeuggeschwindigkeit im wesentlichen null beträgt; und eine Halteöldruckerzeugungseinrichtung zum Erzeugen eines Halteöldrucks ($P_{C1N}$) unmittelbar bevor die Kupplung (C1) beginnt einzurücken, wenn der Fahrzeughaltezustand erfaßt wird; und

wobei die Hydraulikbefehleinrichtung (109) den Öldruckwert ($P_{C1U}$) aus der Zufuhrkennlinienspeichereinrichtung (105) ausliest, wenn der Fahrzeuganfahrzustand erfaßt wird, und den Halteöldruck ($P_{C1N}$) zum ausgelesenen Öldruckwert ($P_{C1U}$) addiert.

4. Steuerungssystem für ein Automatikgetriebe nach Anspruch 3,

wobei die Steuereinheit (41) ferner aufweist: eine Anfangseinrückdruckerzeugungseinrichtung zum Erzeugen eines Anfangseinrückdrucks ($P_{C1S}$); und

wobei die Hydraulikbefehleinrichtung (109) die Summe aus dem ausgelesenen Öldruckwert ($P_{C1U}$) und dem Anfangseinrückdruck ($P_{C1S}$) der Hydrauliksteuerungseinrichtung (103) zuführt und dann zusätzlich den Halteöldruck ($P_{C1N}$) addiert.

5. Steuerungssystem für ein Automatikgetriebe nach einem der Ansprüche 1 bis 4,

wobei die Einrichtung (108) zum Festlegen eines Korrekturwertes den Öldruckkorrekturwert ($P_{C1m}$) auf null setzt, wenn die Differenz zwischen dem realen Einrückzustand und dem idealen Einrückzustand kleiner ist als ein vorgegebener Wert.

## Revendications

1. Système de commande pour transmission automatique, comprenant :

un embrayage (C1) pour transmettre la rotation d'un moteur (10) au mécanisme de transmission d'une unité (16) de changement de vitesses;

une servocommande hydraulique (C-1) pour appliquer/relâcher ledit embrayage (C1);

un moyen de détection (100) d'état de démarrage pour détecter la condition de démarrage du véhicule dans laquelle au moins l'une des conditions suivantes n'est pas satisfaite : l'ouverture des gaz est complètement fermée;

la pédale de frein est enfoncée; et la vitesse du véhicule est sensiblement nulle;

un moyen de détection (50) d'ouverture des gaz pour détecter l'ouverture ($\theta$) des gaz dudit moteur;

un moyen de détection (49) d'état appliqué pour détecter l'état appliqué dudit embrayage (C1);

un moyen de commande hydraulique (103) pour commander la pression d'huile ($P_{C1}$) à envoyer à ladite servocommande hydraulique (C-1); et

une unité de commande (41),

dans lequel ladite unité de commande comprend :

un compteur de temps pour mesurer le temps écoulé (T) depuis le déclenchement d'une commande de mise en prise dudit embrayage;

un moyen de stockage (105) de caractéristique envoyée ayant stocké la valeur ($P_{C1U}$) de ladite pression d'huile pour réaliser les caractéristiques de mise en prise idéales dudit embrayage (C1) en fonction du temps écoulé (T) et de l'ouverture des gaz ($\theta$);

un moyen de stockage (106) de caractéristique d'application ayant stocké la caractéristique d'application dudit embrayage (C1) si les caractéristiques de mise en prise idéales sont obtenues, en fonction du temps écoulé (T) et de l'ouverture des gaz ($\theta$);

un moyen (108) d'établissement de correction pour établir une correction de pression d'huile ($P_{C1m}$) en fonction de la différence qui est déterminée entre l'état appliqué réel dudit embrayage (C1), détecté par ledit moyen de détection (49) d'état appliqué, et l'état appliqué idéal, correspondant au temps écoulé et à l'ouverture des gaz extraits dudit moyen de stockage (106) de caractéristique d'application; et

un moyen d'actionnement hydraulique (109) pour lire la pression d'huile ($P_{C1U}$) correspondant au temps écoulé et l'ouverture des gaz dans ledit moyen de stockage (105) de caractéristique envoyée et pour ajouter, si ledit état de démarrage du véhicule est détecté, ladite correction de pression d'huile ($P_{c1m}$) à ladite pression d'huile lue ($P_{C1U}$).

2. Système de commande pour transmission automatique selon la revendication 1, dans lequel l'état appliqué dudit embrayage (C1) est détecté en termes de régime moteur ($N_E$) par ledit moyen de détection (49) d'état appliqué, et dans lequel ledit moyen de stockage (106) de caractéristique d'application est stocké avec le régime moteur ($N_{EO}$) du cas dans lequel l'état appliqué idéal est obtenu, en fonction du temps écoulé (T) et de l'ouverture des gaz ($\theta$).

3. Système de commande pour transmission automatique selon la revendication 1 ou 2, dans lequel ladite unité de commande (41) comprend de plus : un moyen de détection d'état d'arrêt pour détecter l'état d'arrêt du véhicule dans lequel une plage de vitesse avant est sélectionnée, dans lequel l'ouverture des gaz ($\theta$) est complètement fermée, dans lequel la pédale de frein est enfoncée et dans lequel la vitesse du véhicule est sensiblement nulle; et un moyen de génération de pression d'huile d'arrêt pour générer une pression d'huile d'arrêt ($P_{C1N}$) immédiatement avant que ledit embrayage ne démarre (C1) sa mise en prise, si ledit état d'arrêt du véhicule est détecté, et

dans lequel ledit moyen d'actionnement hydraulique (109) lit la pression d'huile ($P_{C1U}$) dans ledit moyen de stockage (105) de caractéristique envoyée, si l'état de démarrage du véhicule est détecté, et ajoute ladite pression d'huile d'arrêt ($P_{C1N}$) à ladite pression d'huile lue ($P_{C1U}$).

4. Système de commande pour transmission automatique selon la revendication 3,

dans lequel ladite unité de commande (41) comprend de plus : un moyen de génération de pression initiale de mise en prise pour générer une pression initiale de mise en prise ($P_{C1S}$), et dans lequel ledit moyen d'actionnement hydraulique (109) envoie la somme de ladite pression d'huile lue ($P_{C1U}$) et de ladite pression initiale de mise en prise ($P_{C1S}$) audit moyen de commande hydraulique (103), puis rajoute ladite pression d'huile d'arrêt ($P_{C1N}$).

5. Système de commande pour transmission automatique selon l'une quelconque des revendications 1 à 4, dans lequel ledit moyen (108) d'établissement de correction établit ladite correction de-pression d'huile ($P_{c1m}$) à zéro si la différence entre ledit état appliqué réel et ledit état appliqué idéal est inférieure à une valeur établie.

# FIG. 1

EP 0 742 386 B1

# FIG. 2

EP 0 742 386 B1

# FIG. 3

|  |  | Clutch | | | Brake | | | | One-Way Clutch | | |
|---|---|---|---|---|---|---|---|---|---|---|---|
|  |  | C1 | C2 | C3 | B1 | B2 | B3 | B4 | F1 | F2 | F3 |
| R | | × | ○ | × | × | × | ○ | ○ | × | × | × |
| N | | × | × | × | × | × | × | ○ | × | × | × |
| D | 1 ST | ○ | × | × | × | × | (○) | ○ | × | ○ | ○ |
|  | 2 ND | ○ | × | × | ○ | ○ | × | ○ | ○ | × | ○ |
|  | 3 RD | ○ | × | ○ | ○ | ○ | × | × | ○ | × | × |
|  | 4 TH | ○ | ○ | ○ | × | ○ | × | × | × | × | × |

# FIG. 4

# *FIG. 5*

```
                    ┌─────────────────┐
                    │      START      │
                    └─────────────────┘
                             │
                             ▼
                    ╱─────────────────╲      S1
                   ╱ Starting Condition ╲────────  N
                   ╲   Satisfied ?      ╱
                    ╲─────────────────╱
                             │ Y
                             ▼
            ┌─────────────────────────────┐
            │  Third Solenoid Signal ON   │  S2
            └─────────────────────────────┘
                             │
                             ▼
            ┌─────────────────────────────┐
            │        P_CI ← P_C1N          │  S3
            └─────────────────────────────┘
                             │
                             ▼
                    ╱─────────────────╲      S4
                   ╱  Ending Condition  ╲────────  N
                   ╲   Satisfied ?      ╱
                    ╲─────────────────╱
                             │ Y
                             ▼
            ┌─────────────────────────────┐
            │        Application          │  S5
            └─────────────────────────────┘
                             │
                             ▼
                    ┌─────────────────┐
                    │       END       │
                    └─────────────────┘
```

FIG. 6

# FIG. 7

APPLICATION SUB-ROUTINE START

$N_{C1S} \leftarrow N_{C1}$ — S5−1

$P_{C1} = P_{C1N} + P_{C1S}, \quad P_{C1m} = 0$ — S5−2

$N_{C1} < N_{C1S} - DSN$ ? — S5−3 (N)

Start Timing — S5−4

Read Throttle Opening $\theta$ — S5−5

Read Sweep-up Pressure $P_{C1U}$ corresponding to Lapse Time T and Throttole Opening $\theta$ — S5−6

$P_{C1} = P_{C1N} + P_{C1S} + P_{C1U} + P_{C1m}$ — S5−7

Read Ideal Engine RPM $N_{EO}$ corresponding to Lapse Time T and Throttle Opening $\theta$ — S5−8

Read Engine RPM $N_E$ — S5−9

$\triangle N_E = N_E - N_{EO}$ — S5−10

Determine Oil Pressure Correction $P_{C1m}$ corresponding to Rotational Difference $\triangle N_E$ — S5−11

$N_{C1} - N_0 \cdot i \leq \triangle N_{R2}$ ? — S5−12 (N)

Third Solenoid Signal OFF — S5−13

RETURN

# FIG. 8

Sweep-up Pressure

$P_{C1U}$

Elapsed Time T

$\theta_6$
$\vdots$
$\theta_1$
$\theta_0$

# FIG. 9

Ideal Engine RPM

$N_{EO}$

Elapsed Time T

$\theta_5$
$\vdots$
$\theta_1$
$\theta_0$

# FIG. 10

Degree of
Engagement

1.0

0

Elapsed Time T

# FIG. 11

$N_{EA}$

$\delta N_E$

$N_{EO}$

Engine
RPM

0

Elapsed Time T

# FIG. 12

Oil Pressure
Correction
$P_{C1m}$

$-\delta$

0   $\delta$

Rotational
Difference
$\triangle N_E$